(19) Europäisches Patentamt
European Patent Office
Office européen des brevets

(11) **EP 1 680 312 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(21) Anmeldenummer: **04790395.0**

(22) Anmeldetag: **14.10.2004**

(51) Int Cl.:
*B60R 21/0132* (2006.01)    *B60R 21/0134* (2006.01)

(86) Internationale Anmeldenummer:
**PCT/EP2004/011535**

(87) Internationale Veröffentlichungsnummer:
**WO 2005/037611 (28.04.2005 Gazette 2005/17)**

(54) **INSASSENSCHUTZSYSTEM FÜR EIN KRAFTFAHRZEUG**

OCCUPANT PROTECTION SYSTEM FOR A MOTOR VEHICLE

SYSTEME DE PROTECTION DES OCCUPANTS D'UN VEHICULE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
           **17.10.2003 DE 10348998**
           **17.10.2003 DE 10348999**
           **31.01.2004 DE 102004004951**

(43) Veröffentlichungstag der Anmeldung:
**19.07.2006 Patentblatt 2006/29**

(73) Patentinhaber:
• **Volkswagen Aktiengesellschaft**
**38440 Wolfsburg (DE)**
• **AUDI AG**
**85045 Ingolstadt (DE)**
• **Andata Entwicklungstechnologie GmbH & Co. KG**
**5400 Hallein (AT)**

(72) Erfinder:
• **KUHN, Andreas**
**A-5440 Kochl (AT)**
• **NEUBOHN, André**
**38440 Wolfsburg (DE)**
• **WEISS, Christian**
**85113 Böhmfeld (DE)**
• **ZANDER, André**
**39108 Magdeburg (DE)**

(74) Vertreter: **Geske, Kerstin**
**Volkswagen AG**
**Patentabteilung EZP**
**Postfach 1770**
**38436 Wolfsburg (DE)**

(56) Entgegenhaltungen:
EP-A- 0 665 140     WO-A1-2004/054850
DE-A- 10 040 111     DE-A1- 10 223 522
DE-C- 10 103 661     US-A1- 2002 147 533

**Beschreibung**

Die Erfindung betrifft ein Insassenschutzsystem für ein Kraftfahrzeug. Ein derartiges Insassenschutzsystem kann einen Airbag und/oder einen Gurtstraffer umfassen.

Airbagsysteme sind z.B. in dem unter der Internetseite www.informatik.uni-dortmund.de/airbag/seminarphase/hardware_vortrag.pdf veröffentlichten Artikel "Hardware und Mechanik realer Airbagsteuerungen" offenbart.

Die US 5 583 771, die US 5 684 701 und die US 6 532 508 B1 offenbaren die Ansteuerung eines Airbags mittels eines neuronalen Netzes in Abhängigkeit eines Ausgangssignals eines Beschleunigungssensors.

Die DE 198 54 380 A1 offenbart ein Verfahren zum Erkennen der Schwere eines Fahrzeugzusammenstosses, bei dem die Ausgangssignale einer Mehrzahl von Beschleunigungssensoren einem neuronalen Netz zugeführt werden. Bei dem Verfahren wird der Beginn der Auswertung der Ausgangssignale der Beschleunigungssensoren durch ein Triggersignal bestimmt, das von einem Beschleunigungssensor ausgegeben wird, wenn sein Ausgangssignal einen vorgegebenen Schwellwert überschreitet. Dieser Beschleunigungssensor veranlasst die anderen Beschleunigungssensoren, zu ein- und demselben Zeitpunkt das jeweilige Ausgangssignal zu liefern. Es wird weiterhin vorgeschlagen, die Ausgangssignale der Beschleunigungssensoren ein- oder zweimal zu integrieren.

Die DE 100 35 505 A1 offenbart ein Verfahren, bei dem mit Hilfe des neuronalen Netzes das Ausgangssignal eines Beschleunigungssensors in seinem zukünftigen zeitlichen Verlauf auf der Basis der Beschleunigungssensorsignale zu mindest einem definierten Zeitpunkt vorhergesagt wird.

Aus der DE 100 40 111 A1 ist ein Verfahren zur Bildung einer Auslöseentscheidung für Rückhaltemittel in einem Fahrzeug bekannt, bei dem aus Beschleunigungsmesswerten die Differenz gebildet und anschließend der Betrag der Differenz integriert wird. Das Integral wird mit mindestens einem Schwellwert verglichen. Überschreitet das Integral diesen Schwellwert bis zu einem vorgegebenen Zeitpunkt nicht, so wird die Lage einer Auslöseschwelle für die gemessene Beschleunigung oder für eine daraus abgeleitete Geschwindigkeitsänderung so verändert, dass die Auslöseempfindlichkeit geringer wird.

In der DE 101 03 661 C1 ist ein Verfahren zur Seitenaufprallsensierung in einem Kraftfahrzeug beschrieben, wobei auf der linken und auf der rechten Fahrzeugseite Beschleunigungssensoren angeordnet sind, aus deren Ausgangssignalen die Differenz gebildet wird. Das Differenzbeschleunigungssignal wird integriert oder aufsummiert. Zur Seitenaufprallsensierung wird das Differenzgeschwindigkeitssignal mit einer Schwelle verglichen, die in Abhängigkeit von dem Differenzbeschleunigungssignal gebildet wird.

Die US 2002/0147533 A1 offenbart eine Vorrichtung zum. Steuern eines Fahrzeuginsassenrückhaltesystems nach dem Oberbegriff des Anspruchs 1 mit einem ersten Zusammenstossbeschleunigungsmesser bzw. -sensor, der eine Zusammenstossbeschleunigung misst und ein entsprechendes anzeigendes erstes Zusammenstossbeschleunigungssignal liefert, mit einem Mittel zum Bestimmen der Zusammenstossgeschwindigkeit aus dem ersten Zusammenstossbeschleunigungssignal, mit einem Mittel zum Bestimmen einer Zusammenstossverschiebung aus dem ersten Zusammenstossbeschleunigungssignal, mit einer Steuerung zum Vergleichen der Zusammenstossgeschwindigkeit als eine Funktion der Zusammenstossverschiebung mit entweder einem ausgewählten Unterscheidungsschwellenwert oder einem geschalteten Unterscheidungsschwellenwert, und mit einem zweiten Beschleunigungsmesser, der eine Zusammenstossquerbeschleunigung misst und ein entsprechendes Zusammenstossquerbeschleunigungssignal liefert, wobei die Steuerung Mittel zum Vergleichen eines Wertes umfasst, der in funktionaler Beziehung zur Zusammenstossquerbeschleunigung steht als eine Funktion bestimmter Zusammenstossverschiebungen, mit einem Querschwellenwert.

Die WO 2004069607 beschreibt auch den Oberbegriff des Anspruchs 1 fällt aber unter Artikel 54(3) EPÜ.

Es ist Aufgabe der Erfindung, ein verbessertes, insbesondere einen Airbag und/oder einen Gurtstraffer umfassendes, Insassenschutzsystem für ein Kraftfahrzeug anzugeben. Dabei ist es besonders wünschenswert, eine besonders präzise Auslösung eines solchen Insassenschutzsystems für ein Kraftfahrzeug anzugeben.

Vorgenannte Aufgabe wird durch ein Insassenschutzsystem für ein Kraftfahrzeug mit zumindest einem Crashsensor zum Messen einer Bewegungsgröße des Kraftfahrzeuges gelöst, wobei das Insassenschutzsystem eine mittels eines Zündsignals steuerbare Insassenschutzeinrichtung und ein Steuergerät zur Ermittlung bzw. Erzeugung des Zündsignals in Abhängigkeit eines zeitlichen Mittelwertes der mittels des Crashsensors gemessenen Bewegungsgröße über zumindest ein erstes Zeitintervall und eines zeitlichen Mittelwertes der mittels des Crashsensors gemessenen Bewegungsgröße über ein zweites, von dem ersten Zeitintervall verschiedenes, Zeitintervall umfasst.

Eine Insassenschutzeinrichtung im Sinne der Erfindung ist insbesondere ein Airbag und/oder ein Gurtstraffer.

Ein Mittelwert im Sinne der Erfindung kann ein arithmetischer Mittelwert oder ein gewichteter Mittelwert sein. Bei einem derartigen gewichteten Mittelwert können z.B. jüngere Werte der Bewegungsgröße in dem betreffenden Zeitintervall stärker gewichtet werden als ältere Werte der Bewegungsgröße in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der Bewegungsgröße in dem betreffenden Zeitintervall bzw. der Summe von Abtastwerten der Bewegungsgröße in dem betreffenden Zeitintervall proportionaler Wert.

Eine Bewegungsgröße des Kraftfahrzeuges im Sinne der Erfindung kann eine Beschleunigung, eine Geschwindigkeit oder ein Weg bzw. eine von diesen Größen abgeleitete Größe sein. Die Bewegungsgröße ist dabei vorteilhafterweise eine Beschleunigung.

Ein Crashsensor im Sinne der Erfindung kann ein Beschleunigungssensor zum Messen einer Beschleunigung in eine oder mehrere Richtungen sein. Ein Crashsensor im Sinne der Erfindung kann auch ein Radargerät, eine Infrarotanordnung oder eine Kamera sein. In diesem Fall kann eine Bewegungsgröße des Kraftfahrzeuges ein Abstand des Kraftfahrzeuges zu einem Hindernis, die erste oder zweite Ableitung dieses Abstandes oder eine andere äquivalente Größe sein. Ein Crashsensor im Sinne der Erfindung kann auch ein Sensor zur Messung einer Deformation des Kraftfahrzeuges sein. Ein solcher Sensor kann ein faseroptischer Sensor oder ein in der DE 100 16 142 A1 offenbarter Sensor sein. In diesem Falle kann eine Bewegungsgröße des Kraftfahrzeuges eine Deformation des Kraftfahrzeuges, die erste oder zweite Ableitung dieser Deformation oder eine andere äquivalente Größe sein.

Ein Zündsignal im Sinne der Erfindung kann ein binäres Signal sein, das angibt, ob eine Insassenschutzeinrichtung, wie ein Airbag und/oder ein Gurtstraffer, ausgelöst werden soll. Ein solches Zündsignal im Sinne der Erfindung kann ein in der DE 100 35 505 A1 beschriebenes "FIRE/NO-FIRE"-Signal sein. Ein Zündsignal im Sinne der Erfindung kann auch ein komplexeres Signal sein, das angibt, in welchem Ausmaß (z.B. Stufe 1 oder Stufe 2) ein Airbag gezündet werden soll. Ein solches Zündsignal im Sinne der Erfindung kann zudem ein in der DE 100 35 505 A1 beschriebener Crashschwereparameter bzw. eine Insassenbeschleunigung bzw. -belastung sein. Ein Zündsignal im Sinne der Erfindung kann eine den Ort und/oder die Richtung eines Zusammenstoßes angebende Information sein oder umfassen.

Ein zweites, von einem ersten Zeitintervall verschiedenes, Zeitintervall im Sinne der Erfindung kann sich von dem ersten Zeitintervall in seiner Länge und/oder seiner Lage unterscheiden.

In weiterhin vorteilhafter Ausgestaltung der Erfindung ist das Zündsignal mittels des Steuergerätes in Abhängigkeit zeitlicher Mittelwerte der mittels des Crashsensors gemessenen Bewegungsgröße in zwei bis zwanzig, vorteilhafterweise in zwei bis zehn, unterschiedlichen Zeitintervallen ermittelbar. In weiterhin vorteilhafter Ausgestaltung der Erfindung ist das Zündsignal mittels des Steuergerätes in Abhängigkeit zeitlicher Mittelwerte der mittels des Crashsensors gemessenen Bewegungsgröße in zwei bis fünf unterschiedlichen Zeitintervallen ermittelbar. Unterschiedliche Zeitintervalle im Sinne der Erfindung können sich in der Länge und/oder in der Lage voneinander unterscheiden.

In weiterhin vorteilhafter Ausgestaltung der Erfindung sind die Zeitintervalle zwischen 1 ms und 200 ms, insbesondere zwischen 4 ms und 32 ms, vorteilhafterweise zwischen 8 ms und 24 ms, lang: In einer Äusgestaltung der Erfindung sind die Zeitintervalle im wesentlichen gleich lang oder variieren in der Länge.

In weiterhin vorteilhafter Ausgestaltung der Erfindung sind zumindest zwei, insbesondere benachbarte, Zeitintervalle zwischen 1 ms und 50 ms, vorteilhafterweise 2 ms und 16 ms, versetzt. In weiterhin vorteilhafter Ausgestaltung der Erfindung sind alle benachbarten Zeitintervalle je zwischen 1 ms und 50 ms, vorteilhafterweise 2 ms und 16 ms, voneinander versetzt.

In weiterhin vorteilhafter Ausgestaltung der Erfindung umfasst das Insassenschutzsystem zumindest einen weiteren Crashsensor zum Messen einer Bewegungsgröße des Kraftfahrzeuges, wobei das Zündsignal mittels des Steuergerätes zudem in Abhängigkeit zumindest eines zeitlichen Mittelwertes der mittels des weiteren Crashsensors gemessenen Bewegungsgröße über ein Zeitintervall ermittelbar ist. Der weitere Crashsensor ist in weiterhin vorteilhafter Ausgestaltung der Erfindung mehr als 0,5m von dem eingangs genannten Crashsensor entfernt angeordnet.

Vorgenannte Aufgabe wird zudem durch ein Kraftfahrzeug, insbesondere Kraftfahrzeug mit einem Insassenschutzsystem, mit einem oder mehreren der vorgenannten Merkmale gelöst, wobei des Kraftfahrzeug zumindest einen Crashsensor zum Messen einer Bewegungsgröße des Kraftfahrzeuges und eine mittels eines Zündsignals steuerbare Insassenschutzeinrichtung umfasst, wobei das Kraftfahrzeug ein Steuergerät zur Ermittlung bzw. Erzeugung des Zündsignals in Abhängigkeit eines zeitlichen Mittelwertes der mittels des Crashsensors gemessenen Bewegungsgröße über zumindest ein erstes Zeitintervall und eines zeitlichen Mittelwertes der mittels des Crashsensors gemessenen Bewegungsgröße über ein zweites, von dem ersten Zeitintervall verschiedenes, Zeitintervall umfasst.

Vorgenannte Aufgabe wird zudem durch ein Verfahren zum Betrieb eines Insassenschutzsystems für ein Kraftfahrzeug, insbesondere durch ein Verfahren zum Betrieb eines Insassenschutzsystems mit einem oder mehreren der vorgenannten Merkmale, gelöst, wobei das Insassenschutzsystem eine mittels eines Zündsignals steuerbare Insassenschutzeinrichtung umfasst, und wobei das Zündsignal in Abhängigkeit eines zeitlichen Mittelwertes einer gemessenen Bewegungsgröße über zumindest ein erstes Zeitintervall und eines zeitlichen Mittelwertes der gemessenen Bewegungsgröße über ein zweites, von dem ersten Zeitintervall verschiedenes, Zeitintervall ermittelt wird.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1     eine Draufsicht auf ein Kraftfahrzeug,

Fig. 2    ein Ausführungsbeispiel für ein Insassenschutzsystem,

Fig. 3    ein Ausführungsbeispiel eines Steueriangsmoduls,

Fig. 4    ein Ausführungsbeispiel eines Auslösemoduls,

Fig. 5    ein Ausführungsbeispiel eines Ausgangssignals eines Crashsensors,

Fig. 6    das Integral des Ausgangssignals gemäß Fig. 5 in einem Zeitintervall,

Fig. 7    ein Ausführungsbeispiel eines neuronalen Netzes,

Fig. 8    ein Ausführungsbeispiel eines Entscheidungsbaumes,

Fig. 9    ein weiteres Ausführungsbeispiel eines Auslösemoduls,

Fig. 10   ein weiteres Ausführungsbeispiel eines Auslösemoduls und

Fig. 11   ein weiteres Ausführungsbeispiel eines Auslösemoduls.

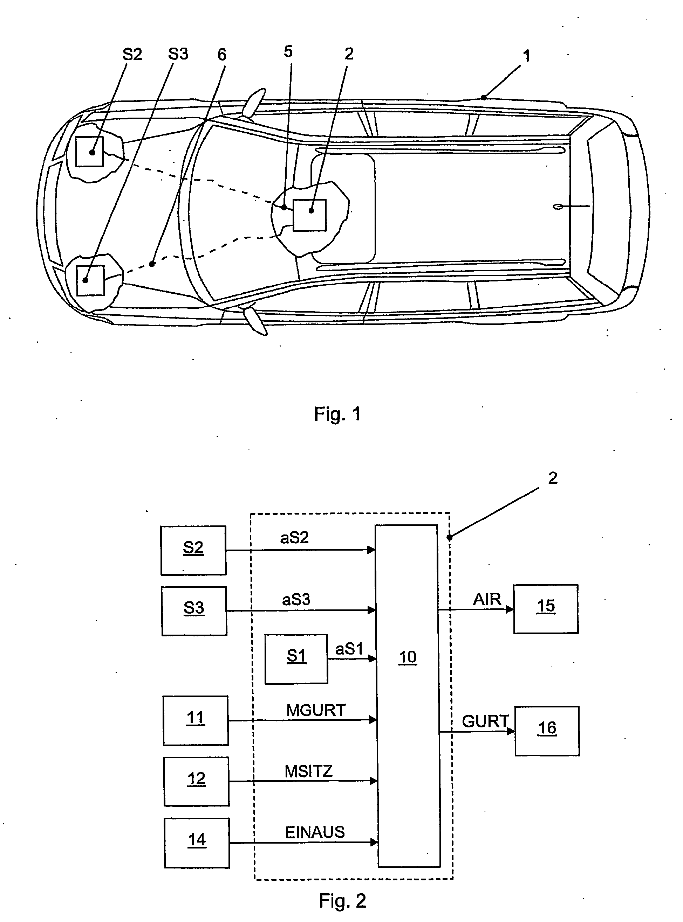

Fig. 1 zeigt eine Draufsicht auf ein Kraftfahrzeug 1 mit einem - in Fig. 2 in Form eines Blockschaltbildes dargestellten - Insassenschutzsystem. Das Insassenschutzsystem umfasst zumindest einen - nicht in Fig. 1 jedoch in Fig. 2 dargestellten - Airbag 15 und/oder einen - nicht in Fig. 1 jedoch in Fig. 2 dargestellten - Gurtstraffer 16. Das Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Crashsensor S2 und einen in die linke vordere Seite des Kraftfahrzeuges 1 integrierten Crashsensor S3. Die Crashsensoren S2 und S3 sind mit dem Steuergerät 2 durch Zuleitungen 5 und 6 verbunden.

Die Crashsensoren S2 und S3 sowie ein weiterer - wie in Fig. 2 dargestellt in das Steuergerät 2 integrierter - Crashsensor S1 sind gemäß dem vorliegenden Ausführungsbeispiel als Beschleunigungssensoren ausgebildet. Geeignete Beschleunigungssensoren sind z.B. in dem unter der Internetseite www.informatik.uni-dortmund.de/airbag/seminarphase/hardware_vortrag.pdf veröffentlichten Artikel "Hardware und Mechanik realer Airbagsteuerungen", Kapitel 3.2 'Beschleunigungssensor' offenbart. Geeignete Beschleunigungssensoren sind z.B. Bosch SMB060, Bosch PAS3 oder Bosch UPF1. Ein geeigneter Beschleunigungssensor kann z.B. einen Bessel-Tiefpassfilter mit einer Grenzfrequenz von z.B. 400 Hz umfassen. Die Crashsensoren S1, S2 und S3 liefern als Ausgangssignale Beschleunigungswerte aS1, aS2 bzw. aS3.

Das Insassenschutzsystem umfasst zudem einen Gurtsensor 11 zum Erkennen, ob ein Sicherheitsgut angelegt ist, und zur Ausgabe einer entsprechenden Gurtinformation MGURT. Das Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Ein geeigneter Sitzbelegungssensor ist z.B. ein in den Sitz integrierter Drucksensor. Geeignet ist auch eine in dem unter der Internetseite www.informatik.uni-dortmund.de/airbag/seminarphase/hardware_vortrag.pdf veröffentlichten Artikel "Hardware und Mechanik realer Airbagsteuerungen", Kapitel 3.3 'Innenraum-Sensierung' offenbarte Infrarotabtastung. Mittels Infrarotabtastung und Fuzzy Logic lässt sich dabei nicht nur erkennen, ob ein Sitz belegt ist, sondern auch, ob es sich dabei um einen Gegenstand wie eine Tasche handelt oder um einen Menschen. Dazu sendet eine Zeile von z.B. acht oder mehr Leuchtdioden oberhalb des Sitzes Infrarotlicht aus und eine CCD-Matrix aus 64 Bildpunkten nimmt die so beleuchtete Szene auf. Diese charged coupled devices, kurz CCD, bestehen aus Photodioden und Verstärkerelementen in Matrixanordnungen. Einfallendes Licht setzt dabei jeweils Ladungsträger frei. Ein so erzeugtes Signal wird verstärkt und verarbeitet beziehungsweise gespeichert. Dieser Vorgang wird unter verschiedenen Winkeln wiederholt und so der Sitz abgetastet. Algorithmen der Bildverarbeitung und der Fuzzy Logic erkennen aus diesen Signalen Konturen von Objekten und Menschen.

Es kann weiterhin vorgesehen sein, dass das Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet.

Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und des Schaltsignals EINAUS.

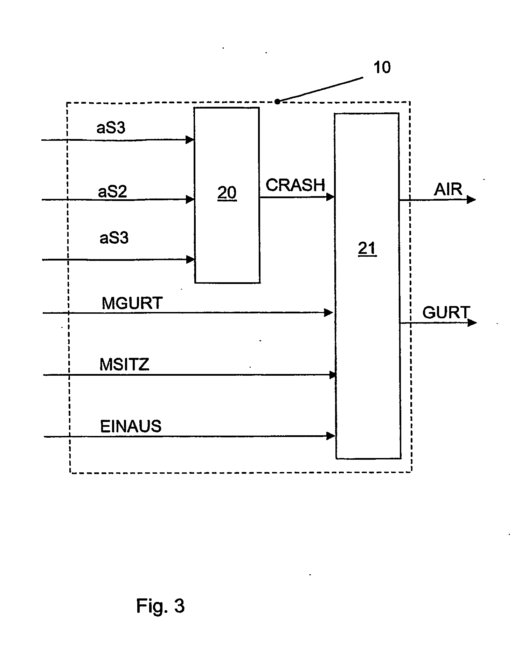

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT können ein -z.B. dem in der DE 100 35 505 A1 beschriebenen "FIRE/NO-FIRE"-Signal entsprechendes - binäres Signal sein, das angibt, ob eine Insassenschutzeinrichtung, wie ein Airbag und/oder ein Gurtstraffer, ausgelöst werden soll. Sowohl der Zündvorschlag CRASH als auch die Zündsignale AIR und GURT können auch ein komplexeres Signal sein. Sowohl der Zündvorschlag CRASH als auch das Zündsignal AIR können z.B. ein komplexeres Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR können z.B. zudem ein in der DE 100 35 505 A1 beschriebener Crashschwereparameter bzw. eine Insassenbeschleunigung bzw. -belastung umfassen. Es kann vorgesehen sein, dass sowohl der Zündvorschlag CRASH als auch die Zündsignale AIR und GURT den Ort und/oder die Richtung eines Zusammenstoßes angeben können.

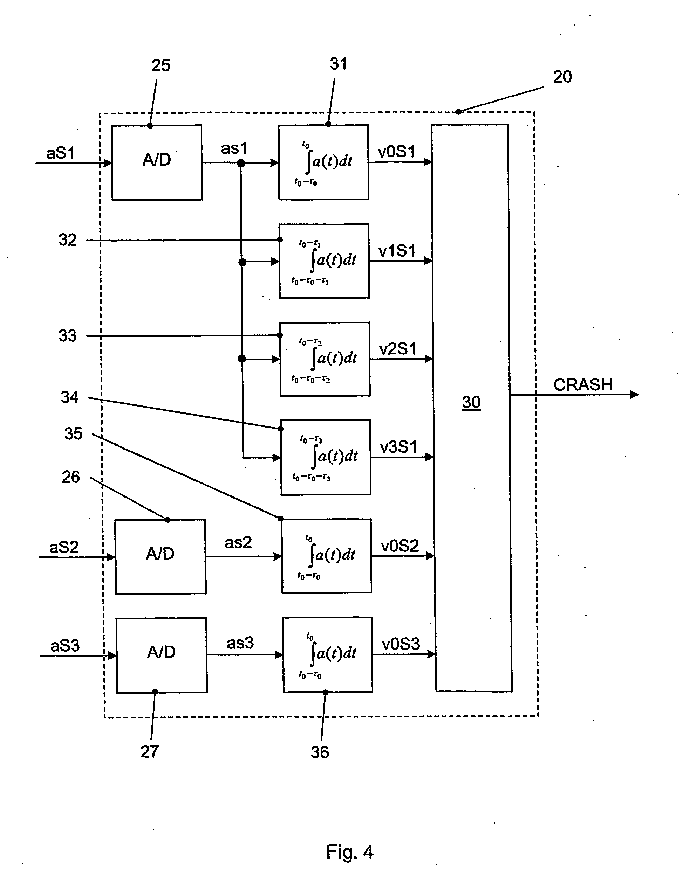

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3.

Die Abtastfrequenz der $\Delta t$ der A/D-Wandler 25, 26 und 27 kann z.B. 4 kHz betragen. Das Auslösemodul 20 umfasst zudem (digitale) Integratoren 31, 32, 33, 34, 35 und 36.

Mittels des Integrators 31 wird ein Pseudogeschwindigkeitswert v0S1 zu einem Zeitpunkt $t_0$ gemäß

$$v0S1 = \int_{t_0-\tau_0}^{t_0} as1 \cdot dt$$

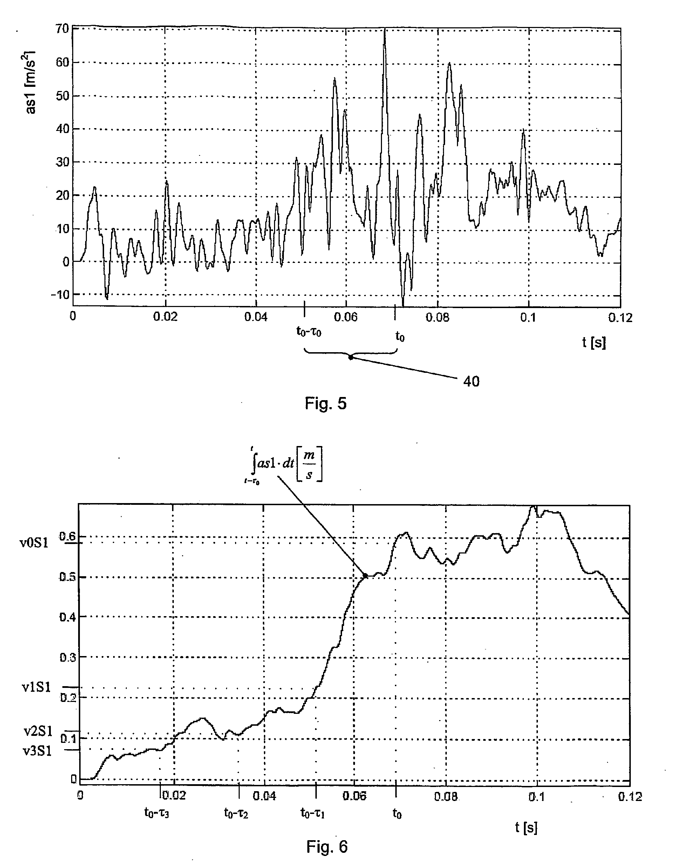

ermittelt, wobei $\tau_0$ die Länge eines Zeitintervalls $[t_0-\tau_0,t_0]$ bzw. 40 (vgl. Fig. 5) ist. Der Zeitpunkt $t_0$ bezeichnet den aktuellen Zeitpunkt, also den aktuellen Wert der Zeit t.

Mittels des Integrators 32 wird ein Pseudogeschwindigkeitswert v1S1 zu einem Zeitpunkt $t_0-\tau_1$ gemäß

$$v1S1 = \int_{t_0-\tau_0-\tau_1}^{t_0-\tau_1} as1 \cdot dt$$

ermittelt.

Mittels des Integrators 33 wird ein Pseudogeschwindigkeitswert v2S1 zu einem Zeitpunkt $t_0-\tau_2$ gemäß

$$v2S1 = \int_{t_0-\tau_0-\tau_2}^{t_0-\tau_2} as1 \cdot dt$$

ermittelt.

Mittels des Integrators 34 wird ein Pseudogeschwindigkeitswert v3S1 zu einem Zeitpunkt $t_0-\tau_3$ gemäß

$$v3S1 = \int_{t_0-\tau_0-\tau_3}^{t_0-\tau_3} as1 \cdot dt$$

ermittelt.

Mittels des Integrators 35 wird ein Pseudogeschwindigkeitswert v0S2 zum Zeitpunkt $t_0$ gemäß

$$v0S2 = \int_{t_0-\tau_0}^{t_0} as2 \cdot dt$$

ermittelt.

Mittels des Integrators 36 wird ein Pseudogeschwindigkeitswert v0S3 zum Zeitpunkt $t_0$ gemäß

$$v0S3 = \int_{t_0 - \tau_0}^{t_0} as3 \cdot dt$$

ermittelt.

Die Wirkung der Integratoren 31, 32, 33, 34, 35 und 36 verdeutlichen Fig. 5 und Fig. 6. Dabei zeigt Fig. 5 einen beispielhaften Verlauf des (abgetasteten) Beschleunigungswertes as1 über die Zeit t bei einem Frontalzusammenstoß des Kraftfahrzeuges 1 mit einem Hindernis. Fig. 6 zeigt einen beispielhaften Verlauf des Pseudogeschwindigkeitswertes v0S1 für $\tau_0$ = 24ms.

In der in Fig. 6 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen.

Die Pseudogeschwindigkeitswerte v0S1, v1S1, v2S1, v3S1, v0S2 und v0S3 sind Beispiele für zeitliche Mittelwerte im Sinne der Erfindung.

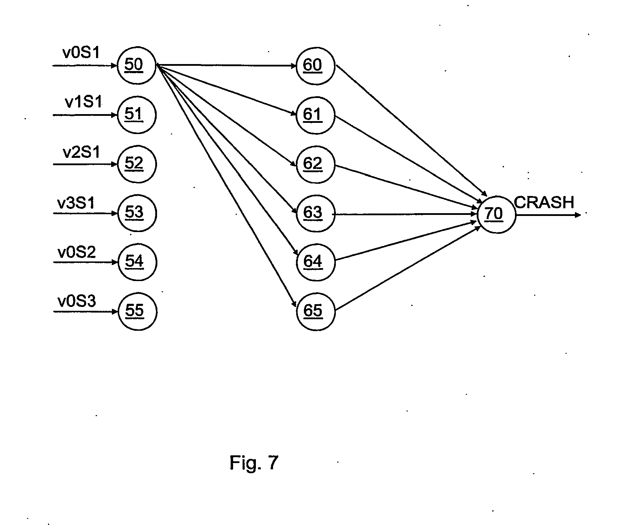

Das Auslösemodul 20 umfasst weiterhin eine Auslöseerzeugung 30 zur Erzeugung des Zündvorschlags CRASH. Die Auslöseerzeugung 30 kann z.B. als neuronales Netz ausgebildet sein, wie es in Fig. 7 in beispielhafter Ausgestaltung dargestellt ist.

Das in Fig. 7 dargestellte neuronale Netz umfasst sechs Eingangsknoten 50, 51, 52, 53, 54, 55, sechs verdeckte Knoten 60, 61, 62, 63, 64, 65 und einen Ausgangsknoten 70, wobei jeder Eingangsknoten 50, 51, 52, 53, 54, 55 mit jedem verdeckten Knoten 60, 61, 62, 63, 64, 65 und jeder verdeckte Knoten 60, 61, 62, 63, 64, 65 mit dem Ausgangsknoten 70 verbunden ist. In Fig. 7 sind jedoch aus Gründen der Übersichtlichkeit nicht alle Verbindungen zwischen den Eingangsknoten 50, 51, 52, 53, 54, 55 und den verdeckten Knoten 60, 61, 62, 63, 64, 65 dargestellt.

Eingangsgröße in den Eingangsknoten 50 ist der Pseudogeschwindigkeitswert v0S1, Eingangsgröße in den Eingangsknoten 51 ist der Pseudogeschwindigkeitswert v1S1, Eingangsgröße in den Eingangsknoten 52 ist der Pseudogeschwindigkeitswert v2S1, Eingangsgröße in den Eingangsknoten 53 ist der Pseudogeschwindigkeitswert v3S1, Eingangsgröße in den Eingangsknoten 54 ist der Pseudogeschwindigkeitswert v0S2, und Eingangsgröße in den Eingangsknoten 55 ist der Pseudogeschwindigkeitswert v0S3. Ausgangsgröße aus dem Ausgangskoten 70 ist der Zündvorschlag CRASH.

Einzelheiten zu neuronalen Netzen können der US 5 583 771, der US 5 684 701 sowie den in der US 5 684 701 zitierten Dokumenten "Techniques And Application Of Neural Networks", Taylor, M. und Lisboa, Ellis Horwood, West Sussex, England, 1993, "Naturally Intelligent Systems", Caudill, M. und Butler, G., MIT Press, Cambridge, 1990 und "Digital Neural Networks", Kung, S. Y., PTR Prentice Hall, Eaglewood Cliffs, NJ., 1993 entnommen werden.

<u>Tabelle 1</u>

```
/* Evaluation function */
int evaluate_Action(double *x)
{
        int CRASH;

        if (v0S3 < δ_v0S3 ) {
                if (v0S2 < δ_v0S2 ) {
                        if (v2S1 < δ_v2S1 ) {
                                if (v0S1 < δ_v0S1 ) {
                                        CRASH = 0;
                                } else {
                                        if (v0S3 < δ_v0S3,2 ) {
                                                CRASH = 0;
                                        } else {
                                                if (v0S1 < δ_v0S1,2 ) {
                                                        if (v1S1 < δ_v1S1 ) {
                                                                CRASH = 1;
                                                        } else {
                                                                CRASH = 0;
                                                        }
                                                } else {
                                                        CRASH = 1;
                                                }
                                        }
                                }
                        } else {
                                if (v0S2 < δ_v0S2,2 ) {
                                        CRASH = 0;
                                } else {
                                        if (v0S3 < δ_v0S3,3 ) {
                                                CRASH = 0;
                                        } else {
                                                CRASH = 1;
                                        }
                                }
                        }
                } else {
                        CRASH = 1;
                }
        } else {
                CRASH = 1;
        }
        return (CRASH);
}
```

Die Auslöseerzeugung 30 kann alternativ z.B. auch als Abfolge von Vergleichen mit Grenzwerten ausgestaltet werden. Tabelle 1 zeigt eine solche Abfolge von Vergleichen mit Grenzwerten, wobei der in Tabelle 1 dargestellte Code durch ein Lernverfahren automatisch erzeugt worden ist. Für den in Tabelle 1 dargestellte Code beträgt $\tau_1$ 4 ms, $\tau_2$ 8 ms und $\tau_0$ 24 ms.

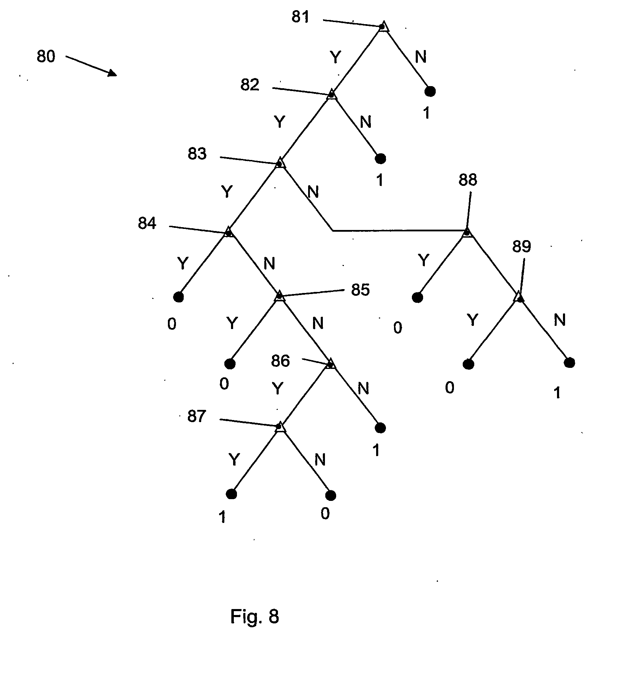

Fig. 8 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$. Bezugszeichen

85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

Die Auslöseerzeugung 30 gemäß Fig. 8 bzw. Tabelle 1 lässt den Pseudogeschwindigkeitswert v3S1 unberücksichtigt. Dieser ist im Lernverfahren berücksichtigt, jedoch von dem Lernalgorithmus zur Erzeugung des Codes gemäß Tabelle 1 verworfen worden.

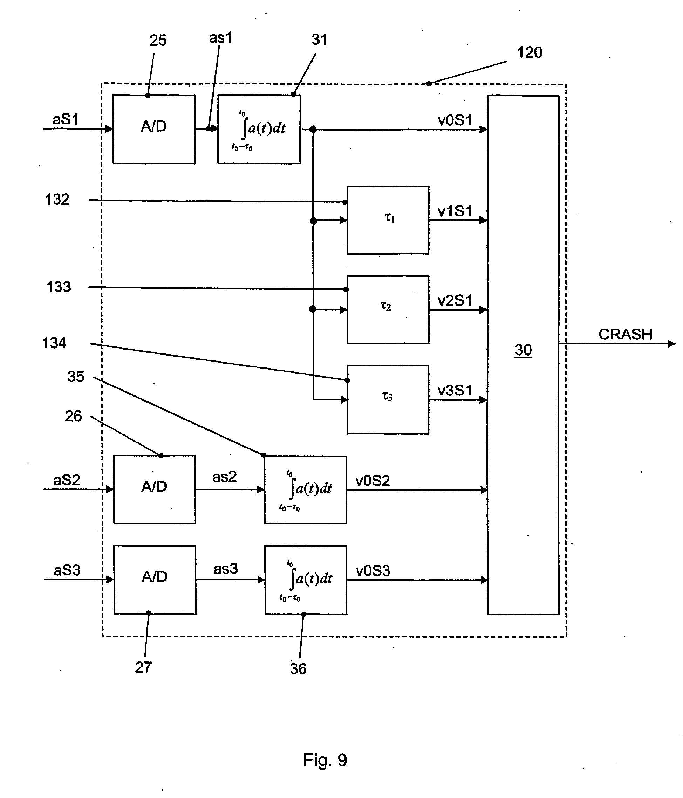

Fig. 9 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschwindigkeitswert v1S1 als um die Zeit $\tau_1$ verzögerter Pseudogeschwindigkeitswert v0S1, der Pseudogeschwindigkeitswert v2S1 als um die Zeit $\tau_2$ verzögerter Pseudogeschwindigkeitswert v0S1 und der Pseudogeschwindigkeitswert v3S1 als um die Zeit $\tau_3$ verzögerter Pseudogeschwindigkeitswert v0S1 ergibt.

Ein mögliche (einfache) Implementierung des Integrators 31 (und entsprechend angepasst für die Integratoren 32, 33 und 34) ist z.B.

$$vS1(i) = c \cdot \Delta t \sum_{j=i-\frac{\tau_0}{\Delta t}}^{i} as1(j)$$

wobei i ein Laufindex zur Angabe des aktuellen Zeitpunktes $t_0$ und eine Konstante ist. Die Pseudogeschwindigkeitswerte v0S1, v1S1, v2S1 und v3S1 ergeben sich in diesem Fall z.B. gemäß folgender Zusammenhänge:

$$v0S1 = vS1(i)$$

$$v1S1 = vS1(i - \frac{\tau_1}{\Delta t})$$

$$v2S1 = vS1(i - \frac{\tau_2}{\Delta t})$$

$$v3S1 = vS1(i - \frac{\tau_3}{\Delta t})$$

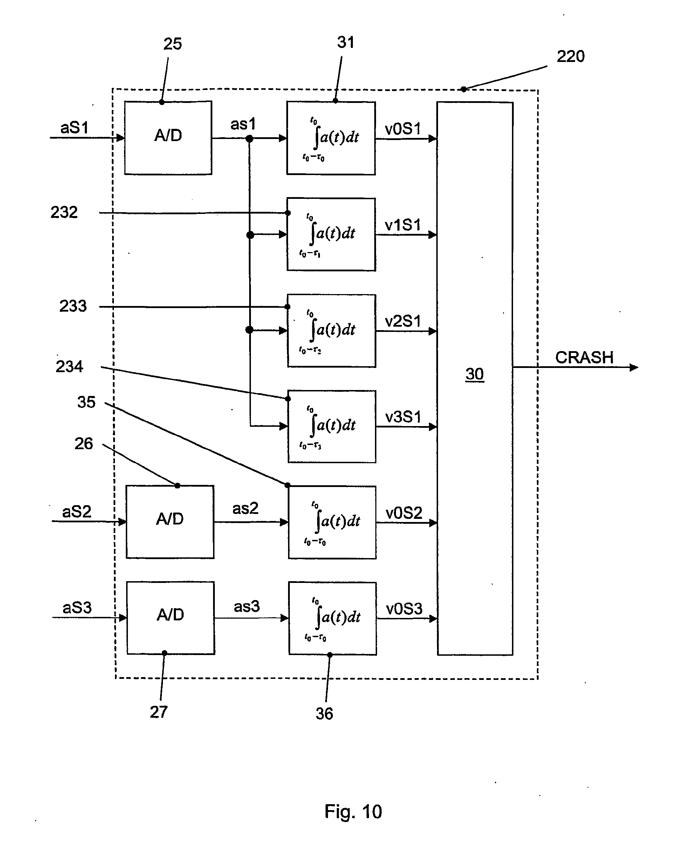

Fig. 10 zeigt ein zum Auslösemodul 20 alternatives Auslösemodul 220 in einer beispielhaften Ausgestaltung. Dabei sind die Integratoren 32, 33 und 34 durch Integratoren 232, 233 und 234 ersetzt. Dabei wird mittels des Integrators 232 der Pseudogeschwindigkeitswert v1S1 gemäß

$$v1S1 = \int_{t_0-\tau_1}^{t_0} as1 \cdot dt$$

ermittelt.

Mittels des Integrators 233 wird ein Pseudogeschwindigkeitswert v2S1 zu einem Zeitpunkt $t_0$ gemäß

$$v2S1 = \int_{t_0-\tau_2}^{t_0} as1 \cdot dt$$

ermittelt.

Mittels des Integrators 234 wird ein Pseudogeschwindigkeitswert v3S1 zu einem Zeitpunkt $t_0$ gemäß

$$v3S1 = \int_{t_0-\tau_3}^{t_0} as1 \cdot dt$$

ermittelt.

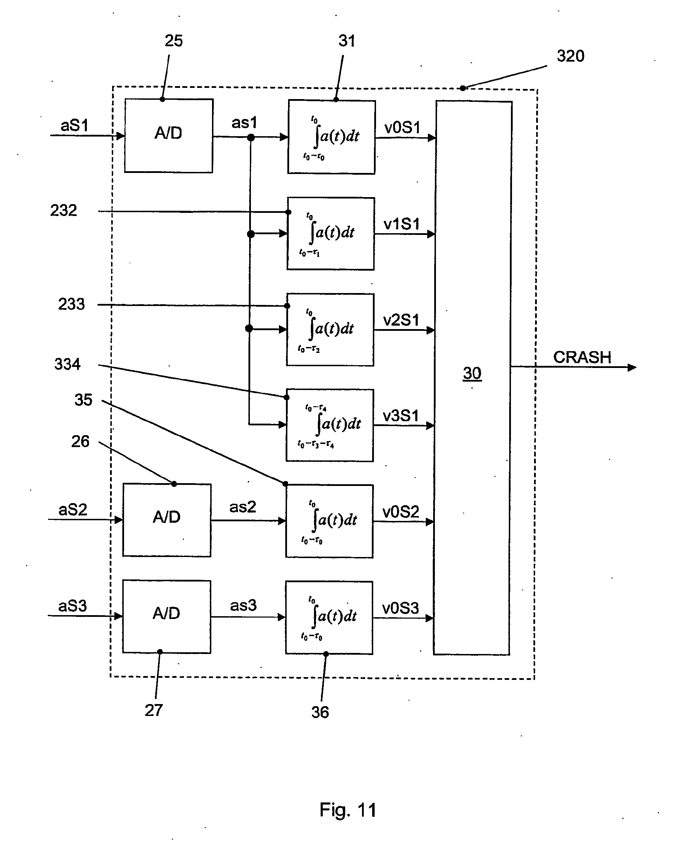

Bei dem Auslösemodul 20 gemäß Fig. 4 und dem Auslösemodul 120 gemäß Fig. 9 unterscheiden sich die Zeitintervalle in ihrer Position. Bei dem Auslösemodul 220 gemäß Fig. 10 unterscheiden sich die Zeitintervalle dagegen in ihrer Länge. Es kann auch vorgesehen werden, dass sich Zeitintervalle in ihrer Länge und in ihrer Position unterscheiden. Ein entsprechendes Ausführungsbeispiel zeigt Fig. 11. Fig. 11 zeigt ein zum Auslösemodul 220 alternatives Auslösemodul 320 in einer beispielhaften Ausgestaltung. Dabei ist der Integrator 234 durch einen Integrator 334 ersetzt, mittels dessen ein Pseudogeschwindigkeitswert v3S1 zu einem Zeitpunkt $t_0-\tau_4$ gemäß

$$v3S1 = \int_{t_0-\tau_3-\tau_4}^{t_0-\tau_4} as1 \cdot dt$$

ermittelt wird.

Die Erfindung führt insbesondere in Verbindung mit neuronalen Netzen, automatisch generierten Entscheidungsbäumen oder vergleichbaren lernenden Auswerteverfahren zu einer besonders robusten Ansteuerung von Airbags und Gurtstraffern.

Obwohl in den Aufführungsbeispielen an Hand von Airbags und Gurtstraffern für einen Frontalzusammenstoß erläutert, soll die Erfindung selbstverständlich nicht auf diesen Fall beschränkt sein. Die Erfindung ist auch für Seitenairbags und andere Insassenschutzsysteme anwendbar. In einer Implementierung für Seitenairbags können die Crashsensoren S2 und S3 z.B. in der B-Säule angeordnet werden. Es kann vorgesehen werden, dass auch für den Crashsensor S2 und/oder den Crashsensor S3 zumindest ein Pseudogeschwindigkeitswert über zumindest einem weiteren Zeitintervall gebildet wird.

Ein Steuergerät im Sinne der Erfindung kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der Bewegungsgrößen bzw. deren Mittelwerte können auch Differenzen von Bewegungsgrößen, Mittelwerte dieser Differenzen und/oder Differenzen von Mittelwerten verwendet werden. So kann z.B. vor den Integratoren 31, 32, 33, 34, 35, 36, 232, 233, 234 bzw. 334 in Fig. 4, Fig. 9, Fig. 10 und/oder Fig. 11 eine Differenzbildung vorgesehen werden, so dass anstelle der abgetasteten Beschleunigungswerte as1, as2, as3 Differenzwerte $\Delta$aus1, $\Delta$as2, $\Delta$as3 Eingangsgrößen der Integratoren 31, 32, 33, 34, 35, 36, 232, 233, 234 bzw. 334 sind, wobei $\Delta$as1 gleich der Differenz as1-as2, $\Delta$as2 gleich der Differenz as1-as3 und $\Delta$as3 gleich der Differenz as2-as3 ist. Es kann zudem vorgesehen sein, dass der Differenzwert $\Delta$as1 in gleicher Weise verarbeitet wird wie der abgetastete Beschleunigungswert as1 in Fig. 4, Fig. 9, Fig. 10 und/oder Fig. 11, dass der Differenzwert $\Delta$as2 in gleicher Weise verarbeitet wird wie der abgetastete Beschleunigungswert as1 in Fig. 4, Fig. 9, Fig. 10 und/oder Fig. 11 und/oder dass der Differenzwert $\Delta$as3 in gleicher Weise verarbeitet wird wie der abgetastete Beschleunigungswert as2 in Fig. 4, Fig. 9, Fig. 10 und/oder Fig. 11. In diesem Fall sind die Anzahl der Integratoren und die Anzahl der Eingangsgrößen der Auslöseerzeugung 30 entsprechend anzupassen.

Differenzen können auch zeitliche Differenzen sein. So kann vorgesehen sein, anstelle der abgetasteten Beschleunigungswerte as1, as2, as3 Differenzwerte $\Delta$as1, $\Delta$as2, $\Delta$as3 als Eingangsgrößen der Integratoren 31, 32, 33, 34, 35, 36, 232, 233, 234 bzw. 334 zu verwenden, wobei $\Delta as1(t)$ gleich der Differenz as 1(t)-as1(t-τ), $\Delta as2$ gleich der Differenz as2(t)-as2(t-τ) oder der Differenz as2(t)-as3(t-τ) und $\Delta as3$ gleich der Differenz as3(t)-as3(t-τ) oder der Differenz as3(t)-as2(t-τ) ist.

Entsprechend vorgenannten Ausführungen in Bezug auf eine Differenzbildung können Bewegungsgrößen im Sinne der Erfindung auch Differenzen von Bewegungsgrößen sein, wenn sie als Eingangsgrößen verwendet werden.

Analog kann mit den Pseudogeschwindigkeitswerten v0S1, v1S1, v2S1, v3S1, v0S2, v0S3 verfahren werden. Entsprechend können Mittelwerte von Bewegungsgrößen im Sinne der Erfindung auch Differenzen von Mittelwerten von Bewegungsgrößen bzw. Mittelwerte von Differenzen von Bewegungsgrößen sein, wenn sie als Eingangsgrößen verwendet werden.

**Bezugszeichenliste**

| | |
|---|---|
| 1 | Kraftfahrzeug |
| 2 | Steuergerät |
| 5, 6 | Zuleitungen |
| 10 | Steuerungsmodul |
| 11 | Gurtsensor |
| 12 | Sitzbelegungssensor |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D Wandler |
| 30 | Auslöseerzeugung |
| 31, 32, 33, 34, 35, 36, 232, 233, 234, 334 | Integrator |
| 40 | Zeitintervall |
| 50, 51, 52, 53, 54, 55 | Eingangsknoten |
| 60, 61, 62, 63, 64, 65 | verdeckter Knoten |
| 70 | Ausgangsknoten |
| 80 | Entscheidungsbaum |
| 81, 82, 83, 84, 85, 86, 87, 88, 89 | Abfrage |
| 132, 133, 134 | Totzeitglied |
| AIR, GURT | Zündsignal |
| aS1, aS2, aS3, as1, as2, as3 | Beschleunigungswert |
| CRASH | Zühdvorschlag |
| EINAUS | Schaltsignal |
| MGURT | Gurtinformation |
| MSITZ | Sitzbelegungsinformation |
| S1, S2, S3 | Crashsensor |
| t | Zeit |
| to | aktueller Zeitpunkt |
| v0S1, v1S1, v2S1, v3S1, v0S2, v0S3 | Pseudogeschwindigkeitswert |
| $\tau_0$, $\tau_1$, $\tau_2$, $\tau_3$ Länge | eines Zeitintervalls |

**Patentansprüche**

1. Insassenschutzsystem für ein Kraftfahrzeug (1) mit zumindest einem Crashsensor (S1) zum Messen einer Bewegungsgröße (aS1) des Kraftfahrzeuges (1), wobei das Insassenschutzsystem eine mittels eines Zündsignals (CRASH, AIR, GURT) steuerbare Insassenschutzeinrichtung (15, 16) umfasst, **dadurch gekennzeichnet, dass** das Insassenschutzsystem ein Steuergerät (2) konfiguriert zur Ermittlung des Zündsignals (CRASH, AIR, GURT) in Abhängigkeit eines zeitlichen Mittelwertes (v0S1) der mittels des Crashsensors (S1) gemessenen vorzeichenbehafteten Bewegungsgröße (aS1) über ein erstes Zeitintervall ($[t_0-\tau_0,t_0]$) sowie eines zeitlichen Mittelwertes (v1S1) der mittels des Crashsensors (S1) genannten gemessenen Bewegungsgröße (aS1) über zumindest ein zweites, von dem ersten Zeitintervall ($[t_0-\tau_0,t_0]$) in derLänge verschiedenes, Zeitintervall ($[t_0-\tau_0-\tau_1, t_0-\tau_1]$) umfasst.

2. Insassenschutzsystem nach Anspruch 1, **dadurch gekennzeichnet, dass** die Bewegungsgröße (aS1) eine Beschleunigung ist.

3. Insassenschutzsystem nach Anspruch 1 oder 2, **dadurch gekennzeichnet, dass** das Zündsignal (CRASH, AIR, GURT) mittels des Steuergerätes (2) in Abhängigkeit zeitlicher Mittelwerte (v0S1, v1S1, v2S1, v3S1) der mittels des Crashsensors (S1) gemessenen Bewegungsgröße (aS1) in zwei bis zwanzig unterschiedlichen Zeitintervallen ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) ermittelbar ist.

4. Insassenschutzsystem nach Anspruch 1, 2 oder 3, **dadurch gekennzeichnet, dass** das Zündsignal (CRASH, AIR, GURT) mittels des Steuergerätes (2) in Abhängigkeit zeitlicher Mittelwerte (v0S1, v1S1, v2S1, v3S1) der mittels des Crashsensors (S1) gemessenen Bewegungsgröße (aS1) in zwei bis fünf unterschiedlichen Zeitintervallen ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) ermittelbar ist.

5. Insassenschutzsystem nach einem der vorhergehenden Ansprüche, **dadurch gekennzeichnet, dass** die Zeitintervalle ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) zwischen 1 ms und 200 ms lang sind.

6. Insassenschutz ystem nach einem der vorhergehenden Anspruch, **dadurch gekennzeichnet, dass** die Zeitintervalle ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) im wesentlichen gleich lang sind.

7. Insassenschutzsystem nach einem der vorhergehenden Ansprüche, **dadurch gekennzeichnet, dass** zumindest zwei Zeitintervalle ($[t_0-\tau_0,t_0]$, $[t_0-\tau_0-\tau_1,t_0-\tau_1]$, $[t_0-\tau_0-\tau_2,t_0-\tau_2]$. $[t_0-\tau_0-\tau_3,t_0-\tau_3]$) zwischen 1 ms und 50 ms versetzt sind.

8. Insassenschutzsystem nach Anspruch 8, **dadurch gekennzeichnet, dass** die Zeitintervalle ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) zwischen 1 ms und 50 ms versetzt sind.

9. Insassenschutzsystem nach einem der vorhergehenden Ansprüche, wobei das Insassenschutzsystem zumindest einen weiteren Crashsensor (S2) zum Messen einer Bewegungsgröße (aS2) des Kraftfahrzeuges (1) umfasst, **dadurch gekennzeichnet, dass** das Zündsignal (CRASH, AIR, GURT) mittels des Steuergerätes (2) zudem in Abhängigkeit zumindest eines zeitlichen Mittelwertes (v0S2) der mittels des weiteren Crashsensors (S2) gemessenen Bewegungsgröße (aS2) über ein Zeitintervall ($[t_0-\tau_0,t_0]$) ermittelbar ist.

10. Kraftfahrzeug (1), **dadurch gekennzeichnet, dass** es ein Insassenschutzsystem nach einem der vorhergehenden Ansprüche aufweist.

11. Verfahren zum Betrieb eines Insassenschutzsystems für ein Kraftfahrzeug (1), wobei das Insassenschutzsystem eine mittels eines Zündsignals (CRASH, AIR, GURT) steuerbare Insassenschutzeinrichtung umfasst, **dadurch gekennzeichnet, dass** das Zündsignal (CRASH, AIR, GURT) in Abhängigkeit eines zeitlichen Mittelwertes (v0S1) einer gemessenen Vorzeichenbehafteten Bewegungsgröße (aS1) über zumindest ein erstes Zeitintervall ($[t_0-\tau_0,t_0]$) sowie eines zeitlichen Mittelwertes (v1S1) der mittels des Crashsensors (S1) gennanten gemessenen Bewegungsgröße (aS1) über zumindest ein zweites von dem ersten Zeitintervall ($[t_0-\tau_0,t_0]$) in der Länge verschiedenes, Zeitintervall ($[t_0-\tau_0-\tau_1,t_0-\tau_1]$) ermittelt wird.

**Claims**

1. Occupant protection system for a motor vehicle (1), having at least one crash sensor (S1) for measuring a movement variable (aS1) of the motor vehicle (1), wherein the occupant protection system comprises an occupant protection device (15, 16) which can be controlled by means of a firing signal (CRASH, AIR, BELT), **characterized in that** the occupant protection system comprises a control unit (2) which is configured to determine the firing signal (CRASH, AIR, BELT) as a function of a chronological mean value (v0S1) of the signed movement variable (aS1), measured by means of the crash sensor (S1), over a first time interval ($[t_0-\tau_0,t_0]$) and of a chronological mean value (v1S1) of the specified movement variable (aS1), measured by means of the crash sensor (S1), over at least one second time interval ($[t_0-\tau_0-\tau_1,t_0-\tau_1]$) which is different from the first time interval ($[t_0-\tau_0,t_0]$) in terms of its length.

2. Occupant protection system according to Claim 1, **characterized in that** the movement variable (aS1) is an acceleration.

3. Occupant protection system according to Claim 1 or 2, **characterized in that** firing signal (CRASH, AIR, BELT) can be determined by means of the control unit (2) as a function of chronological mean values (v0S1, v1S1, v2S1, v3S1) of the movement variable (aS1) which is measured by means of the crash sensor (S1), in two to twenty different time intervals ($[t_0-\tau_0, t_0), [t_0-\tau_0-\tau_1,t_0-\tau_1], [t_0-\tau_0-t_2, t_0-\tau_2], [t_0-\tau_0-\tau_3, t_0-\tau_3]$).

4. Occupant protection system according to Claim 1, 2 or 3, **characterized in that** the firing signal (CRASH, AIR, BELT) can be determined by means of the control unit (2) as a function of chronological mean values (v0S1, v1s1, v2S1, v3S1) of the movement variable (aS1), measured by means of the crash sensor (S1), in two to five different time intervals ($[t_0-\tau_0,t_0), [t_0-\tau_0-\tau_1, t_0-\tau_1], [t_0-\tau_0-\tau_2; t_0-\tau_2], [t_0-\tau_0-\tau_3, t_0-\tau_3]$).

5. Occupant protection system according to one of the preceding claims, **characterized in that** the time intervals ($[t_0-\tau_0,t_0), [t_0-\tau_0-\tau_1, t_0-\tau_1], [t_0-\tau_0-\tau_2, t_0-\tau_2], [t_0-\tau_0-\tau_3, t_0-\tau_3]$) are between 1 ms and 200 ms long.

6. Occupant protection system according to one of the preceding claims, **characterized in that** the time intervals ($[t_0-\tau_0,t_0), [t_0-\tau_0-\tau_1,t_0-\tau_1], [t_0-\tau_0-\tau_2, t_0-\tau_2], [t_0-\tau_0-\tau_3, t_0-\tau_3]$) are essentially of equal length.

7. Occupant protection system according to one of the preceding claims, **characterized in that** at least two time intervals ($[t_0-\tau_0,t_0), [t_0-\tau_0-\tau_1, t_0-\tau_1], [t_0-\tau_0-\tau_2, t_0-\tau_2], [t_0-\tau_0-\tau_3, t_0-\tau_3]$) are offset between 1 ms and 50 ms.

8. Occupant protection system according to one of the preceding claims, **characterized in that** the time intervals ($[t_0-\tau_0,t_0), [t_0-\tau_0-\tau_1, t_0-\tau_1], [t_0-\tau_0-\tau_2, t_0-\tau_2], [t_0-\tau_0-\tau_3, t_0-\tau_3]$) are offset between 1 ms and 50 ms.

9. Occupant protection system according to one of the preceding claims, wherein the occupant protection system comprises at least one further crash sensor (S2) for measuring a movement variable (aS2) of the motor vehicle (1), **characterized in that** the firing signal (CRASH, AIR, BELT) can additionally be determined by means of the control unit (2) as a function of at least one chronological mean value (v0S2) of the movement variable (aS2), measured by means of the further crash sensor (S2), over a time interval ($[t_0-\tau_0,t_0]$).

10. Motor vehicle (1), **characterized in that** it has an occupant protection system according to one of the preceding claims.

11. Method for operating an occupant protection system for a motor vehicle (1), wherein the occupant protection system comprises an occupant protection device which can be controlled by means of a firing signal (CRASH, AIR, BELT), **characterized in that** the firing signal (CRASH, AIR, BELT) is determined as a function of a chronological mean value (v0S1) of a measured, signed movement variable (aS1) over at least one first time interval ($[t_0-\tau_0,t_0]$) and of a chronological mean value (v1S1) of the specified movement variable (aS1), measured by means of the crash sensor (S1), over at least one second time interval ($[t_0-\tau_0-\tau_1,t_0-\tau_1]$) which is different from the first time interval ($[t_0-\tau_0,t_0]$) in terms of its length.

**Revendications**

1. Système de protection des occupants pour un véhicule automobile (1), comprenant au moins un détecteur de collision (S1) pour mesurer une grandeur de déplacement (aS1) du véhicule automobile (1), le système de protection des occupants comprenant un dispositif de protection des occupants (15, 16) qui peut être commandé au moyen d'un signal d'amorçage (CRASH, AIR, GURT), **caractérisé en ce que** le système de protection des occupants comprend un contrôleur (2) configuré pour déterminer le signal d'amorçage (CRASH, AIR, GURT) en fonction d'une valeur moyenne dans le temps (v0S1) de la grandeur de déplacement (aS1) avec signe, mesurée au moyen du détecteur de collision (S1), sur un premier intervalle de temps ($[t_0-\tau_0, t_0]$) ainsi que d'une valeur moyenne dans le temps (v1S1) de ladite grandeur de déplacement (aS1) mèsurée au moyen du détecteur de collision (S1) sur au moins un deuxième intervalle de temps ($[t_0-\tau_0-\tau_1, t_0-\tau_1]$), différent en longueur du premier intervalle de temps ($[t_0-\tau_0, t_0]$).

**2.** Système de protection des occupants selon la revendication 1, **caractérisé en ce que** la grandeur de déplacement (aS1) est une accélération.

**3.** Système de protection des occupants selon la revendication 1 ou 2, **caractérisé en ce que** le signal d'amorçage (CRASH, AIR, GURT) peut être déterminé au moyen du contrôleur (2) en fonction de valeurs moyennes dans le temps (v0S1, v1S1, v2S1, v3S1) de la grandeur de déplacement (aS1) mesurée au moyen du détecteur de collision (S1) dans deux à vingt intervalles de temps ($[t_0-\tau_0, t_0]$, $[t_0-\tau_0-\tau_1, t_0-\tau_1]$ , $[t_0-\tau_0-\tau_2, t_0-\tau_2]$, $[t_0-\tau_0-\tau_3, t_0-\tau_3]$) différents.

**4.** Système de protection des occupants selon la revendication 1, 2 ou 3, **caractérisé en ce que** le signal d'amorçage (CRASH, AIR, GURT) peut être déterminé au moyen du contrôleur (2) en fonction de valeurs moyennes dans le temps (v0S1, v1S1, v2S1, v3S1) de la grandeur de déplacement (aS1) mesurée au moyen du détecteur de collision (S1) dans deux à cinq intervalles de temps ($[t_0-\tau_0, t_0]$ , $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) différents.

**5.** Système de protection des occupants selon l'une des revendications précédentes, **caractérisé en ce que** les intervalles de temps ($[t_0-\tau_0, t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) ont une longueur comprise entre 1 ms et 200 ms.

**6.** Système de protection des occupants selon l'une des revendications précédentes, **caractérisé en ce que** les intervalles de temps ($[t_0-\tau_0, t_0]$, $[t_0-\tau_0-\tau_1, t_0-\tau]$, $[t_0-\tau_0-\tau_2, t_0-\tau_2]$, $[t_0-\tau_0-\tau_3, t_0-\tau_3]$) ont pour l'essentiel la même longueur.

**7.** Système de protection des occupants selon l'une des revendications précédentes, **caractérisé en ce qu'**au moins deux intervalles de temps ($[t_0-\tau_0, t_0]$, $[t_0-\tau_0-\tau_1, t_0-\tau_1]$, $[t_0-\tau_0-\tau_2, t_0-\tau_2]$ $[t_0-\tau_0-\tau_3, t_0-\tau_3]$) sont décalés entre 1 ms et 50 ms.

**8.** Système de protection des occupants selon l'une des revendications précédentes, **caractérisé en ce que** les intervalles de temps ($[t_0-\tau_0, t_0]$, $[t_0-\tau_0-\tau_1, \tau_0-\tau_1]$, $[t_0-\tau_0-\tau_2, t_0-\tau_2]$, $[t_0-\tau_0-\tau_3, t_0-\tau_3]$) sont décalés entre 1 ms et 50 ms.

**9.** Système de protection des occupants selon l'une des revendications précédentes, le système de protection des occupants comprenant au moins un détecteur de collision (S2) supplémentaire pour mesurer une grandeur de déplacement (aS2) du véhicule automobile (1), **caractérisé en ce que** le signal d'amorçage (CRASH, AIR, GURT) peut être déterminé au moyen du contrôleur (2) en plus en fonction d' au moins une valeur moyenne dans le temps (v0S2) de la grandeur de déplacement (aS2) mesurée au moyen du détecteur de collision (S2) supplémentaire sur un intervalle de temps ($[t_0-\tau_0, t_0]$).

**10.** Véhicule automobile (1), **caractérisé en ce qu'**il présente un système de protection des occupants selon l'une des revendications précédentes.

**11.** Procédé pour faire fonctionner un système de protection des occupants pour un véhicule automobile (1), le système de protection des occupants comprenant un dispositif de protection des occupants qui peut être commandé au moyen d'un signal d'amorçage (CRASH, AIR, GURT), **caractérisé en ce que** le signal d'amorçage (CRASH, AIR, GURT) est déterminé en fonction d'une valeur moyenne dans le temps (v0S1) d'une grandeur de déplacement (aS1) avec signe mesurée sur au moins un premier intervalle de temps ($[t_0-\tau_0, t_0]$) ainsi que d'une valeur moyenne dans le temps (v1S1) de ladite grandeur de déplacement (aS1) mesurée au moyen du détecteur de collision (S1) sur au moins un deuxième intervalle de temps $[t_0-\tau_0-\tau_1, t_0-\tau_1]$). différent en longueur du premier intervalle de temps ($[t_0-\tau_0, t_0]$).

Fig. 1

Fig. 2

Fig. 3

Fig. 4

Fig. 5

Fig. 6

v0S1 →(50)

v1S1 →(51)

v2S1 →(52)

v3S1 →(53)

v0S2 →(54)

v0S3 →(55)

(60)

(61)

(62)

(63)

(64)

(65)

(70) CRASH →

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5583771 A
- US 5684701 A
- US 6532508 B1
- DE 19854380 A1
- DE 10035505 A1
- DE 10040111 A1
- DE 10103661 C1
- US 20020147533 A1
- WO 2004069607 A
- DE 10016142 A1

**In der Beschreibung aufgeführte Nicht-Patentliteratur**

- **TAYLOR, M. ; LISBOA.** Techniques And Application Of Neural Networks. Ellis Horwood, 1993
- **CAUDILL, M. ; BUTLER, G.** Naturally Intelligent Systems. MIT Press, 1990
- **KUNG, S. Y.** Digital Neural Networks. PTR Prentice Hall, 1993